# DEMANDE DE BREVET EUROPEEN

(11) **EP 1 170 159 A1**
(43) Date de publication de la demande: **09.01.2002**
(21) Numéro de dépôt: 01401655.4
(22) Date de dépôt: 22.06.2001
(51) Int. Cl.: B60J 3/02, B60R 11/00, B60R 11/02

(54) **Elément d'aménagement intérieur d'un habitacle de véhicule automobile**

(30) Priorité: 07.07.2000 FR 0008890
(71) Demandeur: Renault, 92100 Boulogne Billancourt (FR)
(72) Inventeur: Ponceau, Philippe, 78610 Le Perray en Yvelines (FR); Janodet, Vincent, 91310 Leuville S/Orge (FR)

(57) **Abrégé**

Elément (10) d'aménagement intérieur d'un habitacle de véhicule automobile qui comporte une face (18) de fixation, tournée vers la face apparente (12) d'un panneau d'habillage (14) recouvrant un élément de structure de l'habitacle, qui comporte, à une première extrémité (19), au moins un premier crochet fixe (20) destiné à être inséré, en traversant une découpe (24) du panneau (14), entre le panneau (14) et l'élément de structure, caractérisé en ce qu'il comporte, à une deuxième extrémité (21) opposée de sa face (18) de fixation, un deuxième crochet (28) mobile destiné à être inséré, en traversant la découpe (24) du panneau (14), entre le panneau (14) et l'élément de structure, le deuxième crochet (28) étant susceptible d'être immobilisé en position de montage par un dispositif (38) de verrouillage accessible depuis une partie de l'élément (10) tournée vers l'intérieur de l'habitacle, pour fixer ledit élément (10) sur le panneau (14) d'habillage intérieur.

## Description

L'invention concerne un élément d'aménagement intérieur d'un habitacle de véhicule intérieur.

L'invention concerne plus particulièrement un élément d'aménagement intérieur d'un habitacle de véhicule automobile, du type qui est accroché sur une face apparente d'un panneau d'habillage intérieur qui recouvre avec jeu un élément de structure de l'habitacle, et du type qui comporte une face de fixation, tournée vers la face apparente du panneau, qui comporte à une première extrémité au moins un premier crochet fixe en saillie dont une extrémité est destinée à être insérée, en traversant au moins une découpe du panneau, entre une face cachée du panneau et l'élément de structure de l'habitacle.

On connaît de nombreux exemples d'éléments d'aménagement intérieur de ce type.

Il s'agit par exemple de consoles de plafonnier qui sont destinées à être fixées en position centrale avant sur la face apparente d'un panneau d'habillage intérieur formant garniture de pavillon d'un véhicule automobile, et qui sont destinées à recevoir notamment des doigts d'extrémités de pare-soleils et une sonde de verrouillage centralisé.

Les consoles de ce type sont par exemple fixées au panneau d'habillage par l'intermédiaire d'une paire de crochets en saillie qui sont agencés à une première extrémité d'une face de fixation de la console et qui sont insérés entre la garniture et le pavillon, et d'une vis qui traverse une deuxième extrémité opposée de la console et qui est reçue dans un taraudage conforme lié au pavillon que recouvre la garniture.

De telles consoles sont particulièrement difficiles à monter lors de l'assemblage du véhicule.

En effet, l'opérateur en charge du montage doit, après avoir inséré les crochets en saillie entre la garniture et le pavillon, maintenir la console dans cette position en même temps qu'il introduit la vis dans la console et qu'il la serre, l'ensemble de ces opérations étant effectué dans une position souvent inconfortable.

Le montage d'une telle console est donc une opération longue et fastidieuse qui grève le coût horaire d'assemblage du véhicule considéré.

Pour remédier à cet inconvénient, l'invention propose un élément d'aménagement intérieur d'un habitacle de véhicule qui peut être monté de manière rapide et aisée.

Dans ce but, l'invention propose un élément d'aménagement intérieur d'un habitacle de véhicule du type décrit précédemment, qui comporte, à une deuxième extrémité opposée de sa face de fixation, au moins un deuxième crochet mobile dont une extrémité est destinée à être insérée, en traversant la découpe du panneau, entre la face cachée du panneau et l'élément de structure de l'habitacle, le deuxième crochet étant susceptible d'être immobilisé en position de montage par un dispositif de verrouillage accessible depuis une partie de l'élément tournée vers l'intérieur de l'habitacle, pour fixer ledit élément sur le panneau d'habillage intérieur.

Selon d'autres caractéristiques de l'invention:
- l'élément comporte un support sensiblement plan comportant la face de fixation à partir de laquelle s'étendent deux premiers crochets rigides parallèles et le deuxième crochet mobile, et une coque amovible d'habillage qui est fixée au support et qui comporte le dispositif de verrouillage,
- le deuxième crochet mobile comporte une branche flexible, à l'extrémité de laquelle est agencé un bec parallèle au support, la branche flexible étant mobile entre une position de montage dans laquelle elle fléchit lorsque le bec franchit un bord de la découpe du panneau et une position de repos et d'accrochage dans laquelle le dispositif de verrouillage s'étend en regard d'un dos de la branche qui est opposé au bec pour bloquer la branche, l'ergot s'étendant entre la face cachée du panneau et l'élément de structure de l'habitacle,
- le dispositif de verrouillage comporte un volet monté articulé par rapport à la coque, et le volet est monté pivotant entre une position ouverte de libération et une position fermée de blocage dans laquelle un doigt de verrouillage, porté par sa face intérieure, traverse une ouverture de la coque et une ouverture du support plan pour prendre appui sur le dos de la branche du crochet mobile et bloquer le crochet mobile en position d'accrochage,
- le volet comporte des moyens d'emboîtement, notamment par l'intermédiaire d'au moins une patte élastique du volet s'emboîtant sous le bord de l'ouverture de la coque, qui assurent, en position fermée du volet, son immobilisation par rapport à la coque,
- le volet épouse le contour de l'ouverture de la coque en matériau plastique, et il est venu de matière et articulé par rapport à celle-ci par une charnière moulée,
- le support comporte une partie en saillie qui s'étend au bord de l'ouverture du support à partir de la face de fixation du support et qui comporte une rampe inclinée tournée vers le crochet mobile permettant l'appui du doigt du dispositif de verrouillage pour bloquer le crochet mobile,
- la partie en saillie s'étend sur la face de fixation jusqu'à la première extrémité du support plan et porte les crochets rigides,
- le support comporte, sur sa face intérieure tournée vers l'intérieur de la coque, des moyens de fixation pour des équipements électriques, notamment pour une sonde de verrouillage centralisé et/ou un microphone de téléphonie cellulaire, et sa partie en saillie comporte une fiche femelle pour la connexion desdits équipements électriques, un fond de la fiche étant percé de passages débouchant dans la face intérieure du support pour le passage de fils d'alimentation desdits équipements électriques,
- une fenêtre, notamment en forme de grille, est découpée dans la coque au droit des moyens de fixation des équipements électriques, notamment pour le fonctionnement de la sonde de verrouillage centralisé et/ou du microphone de téléphonie cellulaire,
- l'élément est destiné à être agencé en position centrale avant d'une panneau de garniture intérieure d'un pavillon du véhicule, et sa coque bombée comporte au moins deux évidements cylindriques, opposés transversaiement par rapport à la direction longitudinale du véhicule et présentant longitudinalement une section ouverte en forme de U, dont chacun est destiné à recevoir un doigt d'extrémité de pare-soleil du véhicule,
- les parois intérieures des évidements comportent des lumières pour le passage de lames longitudinales élastiques de rétention des doigts d'extrémités des pare-soleils qui sont portées par la face intérieure du support plan, et
- la face intérieure du support porte sur ses bords des pattes élastiques de fixation qui sont destinées à être reçues dans des évidements complémentaires de l'intérieur de la coque pour permettre l'emboîtement du support dans la coque.

D'autres caractéristiques et avantages de l'invention apparaîtront à la lecture de la description détaillée qui suit pour la compréhension de laquelle on se reportera aux dessins annexés dans lesquels:
- la figure 1 est une vue en perspective éclatée de dessous d'un élément d'aménagement intérieur selon l'invention ;
- la figure 2 est une en perspective de dessus de l'élément d'aménagement intérieur de la figure 1 ;
- la figure 3 est une vue en section longitudinale de l'assemblage et du montage sur un panneau d'habillage intérieur de l'élément d'aménagement intérieur des figures 1 et 2 ;
- la figure 4 est une vue de l'élément d'aménagement intérieur de la figure 3 représenté monté, le volet étant en position de libération ;
- la figure 5 est une vue de l'élément d'aménagement intérieur de la figure 3 représenté monté, le volet étant en position de blocage ;
- la figure 6 est une vue en coupe transversale par la ligne 6-6 de la figure 5 de la coque de l'élément d'aménagement intérieur comportant le volet immobilisé par rapport à celle-ci en position de blocage ;
- la figure 7 est une vue de côté de l'élément d'aménagement intérieur selon l'invention représenté monté, un doigt d'extrémité d'un pare-soleil approché d'un évidement cylindrique pour sa réception;
- la figure 8 est une vue de l'élément d'aménagement intérieur de la figure 7, le doigt d'extrémité du pare-soleil étant reçu dans l'évidement cylindrique ;

Dans la description qui va suivre, des chiffres de référence identiques désignent des pièces identiques ou ayant des fonctions similaires.

On a représenté sur les figures, l'ensemble d'un élément 10 d'aménagement intérieur d'un habitacle de véhicule automobile réalisé conformément à l'invention.

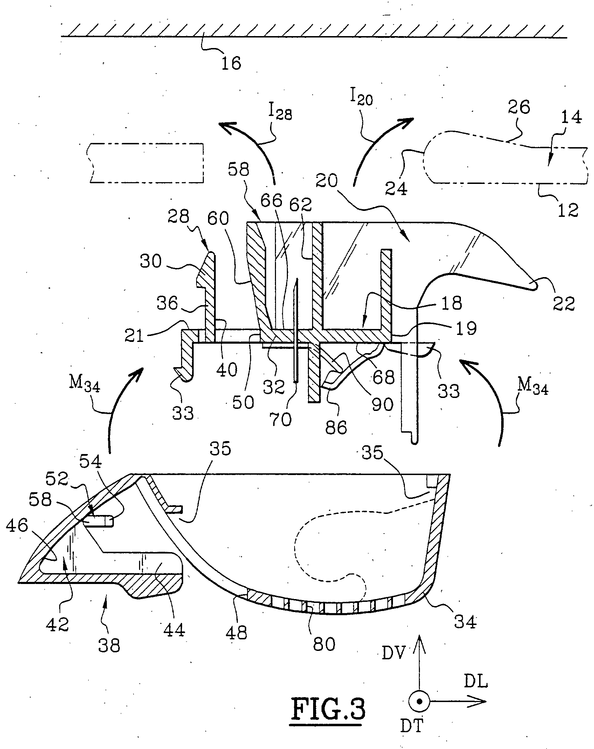

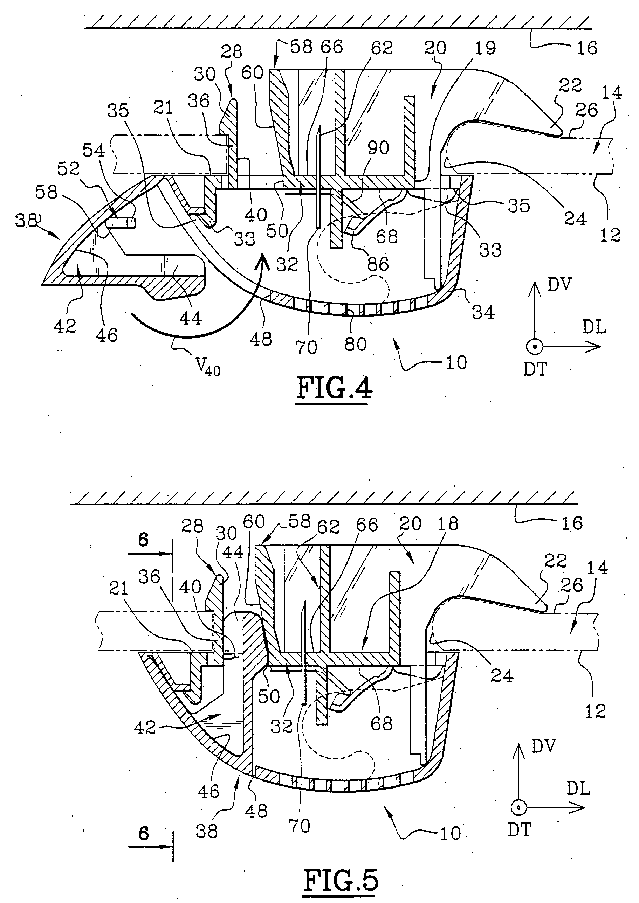

De manière connue, l'élément 10 d'aménagement intérieur est destiné, comme l'illustrent notamment les figures 3 et 4, à être accroché sur une face apparente 12 d'un panneau 14 d'habillage intérieur qui recouvre avec jeu un élément 16 de structure de l'habitacle. L'élément 10 est par exemple destiné à former une console qui est agencée en position centrale avant d'un panneau 14 formant garniture pour recouvrir la face d'un pavillon 16 qui est tournée vers l'intérieur de l'habitacle du véhicule automobile.

L'élément 10 d'aménagement intérieur comporte à cet effet une face 18 de fixation, tournée vers la face apparente 12 du panneau 14, qui comporte à une première extrémité 19 au moins un premier crochet 20 fixe en saillie dont une extrémité 22 est destinée à être insérée, en traversant au moins une découpe 24 du panneau 14, entre une face cachée 26 du panneau et l'élément 16 de structure de l'habitacle.

Traditionnellement, un tel élément 10 formant console est fixé au panneau 14 formant garniture de pavillon par l'intermédiaire d'une vis (non représentée) qui traverse l'élément 10, le panneau 14, et qui est reçue dans un écrou (non représenté) solidaire de l'élément 16 formant pavillon.

Lors du montage de la console 10, on doit .insérer préalablement le crochet 20 en saillie entre la garniture 14 et le pavillon 16, puis, en maintenant la console en position, introduire la vis dans la console 10 puis la serrer, ce qui constitue une opération longue et fastidieuse.

Pour remédier à cet inconvénient, comme l'illustrent les figures 3 et 4, l'invention propose un élément 10 du type précédemment décrit qui comporte, à une deuxième extrémité 21 opposée à l'extrémité 19 de sa face 1.8 de fixation, au moins un deuxième crochet 28 mobile dont une extrémité 30 est destinée à être insérée, en traversant la découpe 24 du panneau 14, entre la face cachée 26 du panneau 14 et l'élément 16 de structure de l'habitacle, le deuxième crochet 28 étant susceptible d'être immobilisé en position de montage par un dispositif de verrouillage qui est accessible depuis une partie de l'élément 10 tournée vers l'intérieur de l'habitacle, pour fixer ledit élément 10 sur le panneau 14 d'habillage intérieur.

Dans le mode de réalisation préféré de l'invention, l'élément 10 est entièrement réalisé en un matériau plastique mais cette disposition n'est pas limitative de l'invention, et tout autre matériau, comme par exemple un alliage d'aluminium, utilisé pour des considérations esthétiques, pourrait être employé pour la réalisation de l'élément 10.

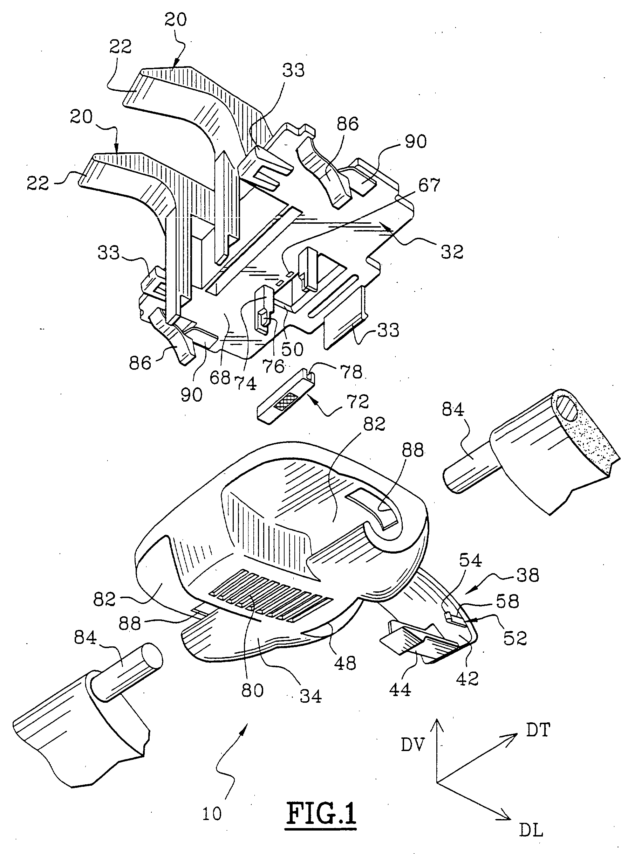

Comme l'illustrent les figures 1 à 5, l'élément 10 comporte un support 32 sensiblement plan comportant la face 18 de fixation, tournée vers l'élément 16 de structure de l'habitacle, à partir de laquelle s'étendent deux premiers crochets 20 rigides parallèles et le deuxième crochet mobile 28.

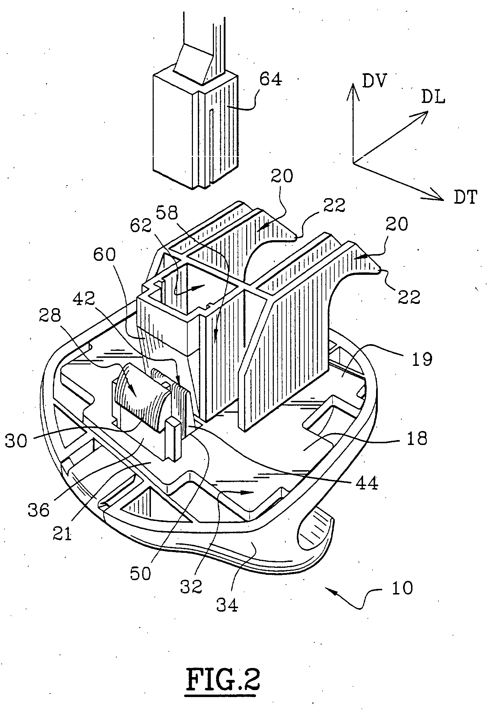

Comme on peut le voir à la figure 2, les deux premiers crochets 20 rigides présentent chacun sensiblement la forme d'un "L" couché dont la grande branche est tournée vers l'extérieur de l'élément 10. Chaque crochet 20 est contenu dans un plan de direction longitudinale "DL" perpendiculaire à la face 18 de fixation, et l'extrémité libre de la petite branche du "L" de chaque crochet 20 rejoint la face 18 de fixation du support 32. L'extrémité libre de la grande branche forme l'extrémité 22 de chaque crochet.

Dans le mode de réalisation préféré de l'invention, l'élément 10 comporte deux crochets 20 rigides parallèles qui proposent ainsi une largeur d'accrochage optimale sur le panneau 14 correspondant à l'écartement des crochets 20. Toutefois, cette disposition n'est pas limitative de l'invention. L'élément peut comporter un nombre supérieur ou inférieur de crochets 20 parallèles, du moment que, comme l'illustre la figure 2, ils s'étendent transversalement suivant la direction "DT" sur la majeure partie de la largeur transversale du support 32.

Comme l'illustre la figure 1, l'élément 10 comporte une coque 34 amovible d'habillage qui est fixée au support 32 et qui comporte le dispositif 38 de verrouillage, qui sera décrit ultérieurement. Comme l'illustrent les figures 3 et 4, une face intérieure 68 du support 32 porte sur ses bords des pattes élastiques 33 de fixation qui sont destinées à être reçues dans des évidements 35 complémentaires de l'intérieur de la coque 34 pour permettre l'emboîtement du support 32 dans la coque 34. La coque 34 est emboîtée sur le support 32 comme le montrent les flèches "M₃₄" de la figure 3.

Le deuxième crochet mobile 28 comporte une branche 36 flexible, de direction verticale "DV", à l'extrémité de laquelle est agencé un bec 30 parallèle au support 32 qui constitue l'extrémité 30 du crochet 28.

Au montage, l'élément 10 est présenté au droit et en dessous de la découpe 24 du panneau 14, comme illustré à la figure 3. Les extrémités 22 des crochets 20 sont introduites en premier lieu à travers la découpe 24, comme illustré par la flèche "I₂₀", puis le crochet 28 est introduit à son tour à travers la découpe 24, comme illustré par la flèche "I₂₈".

La branche flexible 36 du crochet 28 est successivement mobile entre une position de montage dans laquelle, au cours de l'introduction du crochet 28, elle fléchit lorsque le bec 30 franchit le bord de la découpe 24 du panneau 14, une position intermédiaire d'emboîtement dans laquelle la branche 36 n'est pas fléchie et dans laquelle le bec 30 s'étend entre la face cachée 26 du panneau 14 et l'élément 16 de structure de l'habitacle, et enfin une position d'accrochage sensiblement semblable à la position d'emboîtement, qui est représentée à la figure 5, mais dans laquelle le dispositif 38 de verrouillage s'étend en regard d'un dos 40 de la branche qui est opposé au bec 30 pour bloquer la branche 36.

A cet effet, comme l'illustrent les figures 1, 4 et 5 le dispositif 38. de verrouillage comporte un volet 42 qui est articulé suivant un axe de direction transversale "DT" par rapport à la coque 34. Le volet 42 est monté pivotant entre une position ouverte de libération, représenté à la figure 4, et une position fermée de blocage, représentée à la figure 5, dans laquelle un doigt 44 de verrouillage, porté par la face intérieure 46 du volet 42, traverse une ouverture 48 de la coque et une ouverture 50 du support plan 32 comme l'illustre la flèche "V₄₀" de la figure 5, pour prendre appui sur le dos 40 de la branche 36 du crochet mobile 28 et bloquer longitudinalement le dos 40 du crochet 28 mobile de façon qu'il soit en position d'accrochage.

Avantageusement, le volet 42 épouse le contour de l'ouverture 48 de la coque 34 en matériau plastique, et il est venu de matière avec celle-ci. Le volet 42 est articulé par rapport à la coque 34 par l'intermédiaire d'une charnière moulée d'axe transversal "DT". Cette disposition permet de réaliser le volet 42 à moindre coût.

Pour immobiliser le volet 42 dans sa position fermée qui permet de bloquer le crochet 28 mobile en position d'accrochage, le volet 42 comporte des moyens d'emboîtement.

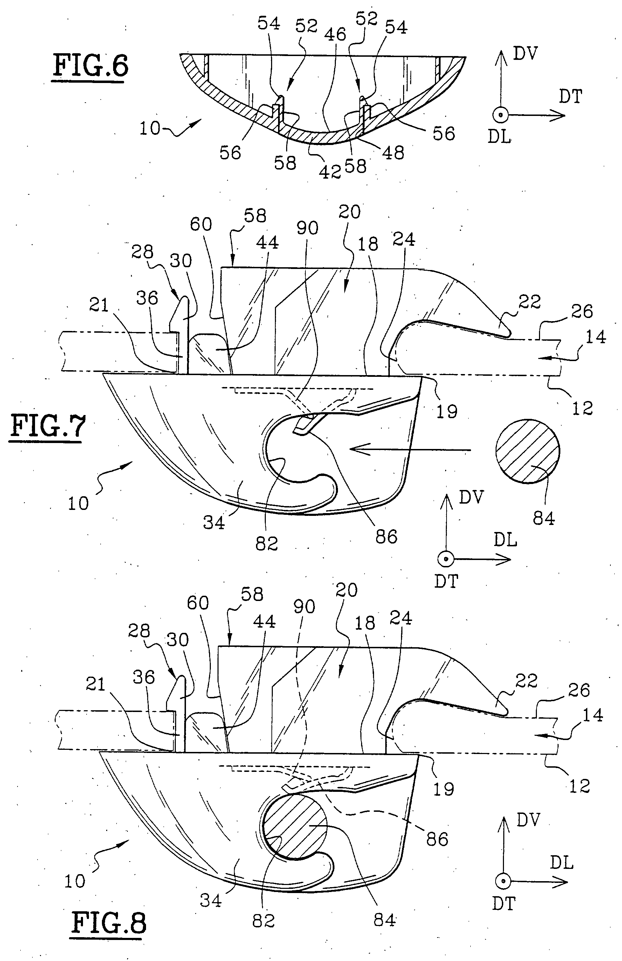

Ceux-ci sont réalisés sous la forme d'une paire de pattes élastiques 52 qui sont opposées suivant la direction transversale "DT", qui s'étendent perpendiculairement à partir de la face intérieure 46 du volet 42, dont des branches 58 sont flexibles transversalement, et dont des ergots 54 s'emboîtent sous le bord 56 de l'ouverture 48 de la coque 34 de façon à permettre, en position fermée du volet 42, son immobilisation par rapport à la coque 34, comme représenté plus particulièrement à la figure 6.

Dans le mode de réalisation préféré de l'invention, le support 32 comporte une partie 58 en saillie qui s'étend au bord de l'ouverture 50 du support à partir de la face de fixation du support et qui comporte une rampe 60, inclinée par rapport à la verticale et tournée vers le crochet mobile 28, qui permet l'appui du doigt 44 du dispositif 38 de verrouillage pour bloquer le crochet mobile 28. La rampe 60 s'étend verticalement, en inclinaison vers le crochet mobile 28, le long de la partie 58 en saillie à partir de la face de fixation 18 du support 32.

De la sorte, comme l'illustre la figure 5, lorsque le volet 42 est en position fermée de blocage, le doigt 44 est en appui sur la rampe 60 et empêche la flexion de la branche 40 du crochet mobile 28, ce qui permet d'immobiliser celui-ci en position d'accrochage.

Avantageusement, la partie en saillie 58 présente sensiblement la forme d'un parallélépipède de direction générale longitudinale "DL" qui est venu de matière avec le support 32 et qui s'étend à la verticale le long de la face 18 de fixation du support 32 jusqu'à la première extrémité 19 du support plan 32. Les crochets rigides 20 sont notamment venus de matière avec la partie en saillie 58.

La partie 58 en saillie comporte, entre la rampe 60 et les crochets rigides 20, une fiche 62 pour la connexion d'équipements électriques agencés dans l'élément 10. La fiche 62 est notamment un fiche femelle destinée à recevoir une fiche mâle 64 conforme qui permet de relier lesdits équipement électriques à un circuit électrique (non représenté) du véhicule. La fiche mâle 64 est représentée à la figure 2 en regard de la fiche femelle 62.

Un fond 66 de la fiche 62, représenté aux figures 3 à 5, est percé de passages 67, représentés figure 2, qui débouchent dans la face intérieure 68 du support 32 pour le passage de fils d'alimentation 70 desdits équipements électriques représentés figures 3 à 5.

Les équipements électriques de l'élément 10 comportent par exemple une sonde de verrouillage centralisé (non représentée) et/ou un microphone 72 de téléphonie cellulaire, comme représenté à la figure 1. La face intérieure 68 du support 32 comporte des moyens de fixation pour ces équipements électriques, par exemple des pattes 74 qui s'étendent à partir de la face intérieure. 68 et dont les extrémités portent des plots 76 destinés à être reçus dans des portées 78 du microphone 72 de téléphonie cellulaire.

Avantageusement, comme l'illustre la figure 1, une fenêtre 80 formant grille est découpée dans la coque 34 en regard du microphone 72 de téléphonie cellulaire, ou des autrés équipements électriques (non représentes), pour permettre leur bon fonctionnement.

Par ailleurs, comme l'illustrent les figures 1, 7, et 8, la coque 34 de l'élément 10 est bombée et comporte au moins deux évidements 82 cylindriques d'axe transversal "DT" qui présentent longitudinalement une section ouverte suivant la direction longitudinale "DL" qui est de la forme d'un U couché.

Les évidements 82 sont destinés à recevoir des doigts 84'd'extrémités de pare-soleils du véhicule.

Comme l'illustre la figure 7, les doigts 84 des pare-soleils peuvent être enfilés dans les évidements 82 suivant la direction longitudinale "DL".

La rétention des doigts 84 des pare-soleils dans les évidements 82 est assuré par des lames 86 élastiques qui, lorsque les doigts 84 des pare-soleils sont dans les évidements 82, sont sollicités en compression suivant la direction "DV" au contact de la périphérie de chaque doigt 84. Chaque lame 86 traverse une lumière 88, représentée figure 1, qui est découpée dans la paroi intérieure de l'évidement 84, et est portée par la face intérieure 68 du support plan 32.

Ainsi, chaque lame 86 est réalisée en matériau plastique, est sertie sur le support plan 32, et est articulée à sa jonction avec le support plan 32 par une charnière moulée. Plus particulièrement, chaque lame 86 est rappelée élastiquement vers l'intérieur de l'évidement 82 par une ressort à lame 90 qui prend appui sous la lame 86 et la sollicite vers l'intérieur de l'évidement 82. Le ressort à lame 90 est lui aussi fixé sur la face intérieure 68 du support plan 32, et peut indifféremment être réalisé en matériau plastique ou en un matériau métallique du type "acier à ressort".

L'élément 10 peut donc assurer de nombreuses fonctions tout en étant peu coûteux à réaliser et facile à monter.

## Revendications

1. Elément (10) d'aménagement intérieur d'un habitacle de véhicule automobile, du type qui est accroché sur une face apparente (12) d'un panneau (14) d'habillage intérieur qui recouvre avec jeu un élément (16) de structure de l'habitacle, et du type qui comporte une face (18) de fixation, tournée vers la face apparente (12) du panneau (14), qui comporte à une première extrémité (19) au moins un premier crochet fixe (20) en saillie dont une extrémité (22) est destinée à être insérée, en traversant au moins une découpe (24) du panneau, entre une face cachée (26) du panneau (14) et l'élément (16) de structure de l'habitacle,
**caractérisé en ce qu'**il comporte, à une deuxième extrémité (21) opposée de sa face (18) de fixation, au moins un deuxième crochet (28) mobile dont une extrémité est destinée à être insérée, en traversant la découpe (24) du panneau (14), entre la face cachée (26) du panneau (14) et l'élément (16) de structure de l'habitacle, le deuxième crochet (28) étant susceptible d'être immobilisé en position de montage par un dispositif (38) de verrouillage accessible depuis une partie de l'élément (10) tournée vers l'intérieur de l'habitacle, pour fixer ledit élément (10) sur le panneau (14) d'habillage intérieur.

2. Elément (10) selon la revendication précédente, **caractérisé en ce qu'**il comporte un support (32) sensiblement plan comportant la face de fixation (18) à partir de laquelle s'étendent deux premiers crochets (20) rigides parallèles et le deuxième crochet mobile (28), et une coque (34) amovible d'habillage qui est fixée au support (32) et qui comporte le dispositif (38) de verrouillage.

3. Elément (10) selon la revendication précédente, **caractérisé en ce que** le deuxième crochet mobile (28) comporte une branche flexible (36) à l'extrémité de laquelle est agencé un bec (30) parallèle au support, la branche flexible (36) étant mobile entre une position de montage dans laquelle elle fléchit lorsque le bec (30) franchit un bord de la découpe (24) du panneau (14) et une position de repos et d'accrochage dans laquelle le dispositif de verrouillage (38) s'étend en regard d'un dos (40) de la branche (36) qui est opposé au bec (30) pour bloquer la branche (36), le bec (30) s'étendant entre la face cachée (26) du panneau (14) et l'élément (16) de structure de l'habitacle.

4. Elément (10) selon la revendication précédente, **caractérisé en ce que** le dispositif de verrouillage (38) comporte un volet (42) monté articulé par rapport à la coque (34), et **en ce que** le voiet (42) est monté pivotant entre une position ouverte de libération et une position fermée de blocage dans laquelle un doigt (44) de verrouillage, porté par sa face intérieure (46), traverse une ouverture (48) de la coque et une ouverture (50) du support plan (32) pour prendre appui sur le dos (40) de la branche (36) du crochet mobile (28) et bloquer le crochet mobile (28) en position d'accrochage.

5. Elément (10) selon la revendication précédente, **caractérisé en ce que** le volet (42) comporte des moyens d'emboîtement, notamment par l'intermédiaire d'au moins une patte élastique (52) du volet s'emboîtant sous le bord (56) de l'ouverture de la coque (34), qui assurent, en position fermée du volet (42), son immobilisation par rapport à la coque (34).

6. Elément (10) selon la revendication précédente, **caractérisé en ce que** le volet (42) épouse le contour de l'ouverture (48) de la coque (34) en matériau plastique, et **en ce qu'**il est venu de matière et articulé par rapport à celle-ci par une charnière moulée.

7. Elément (10) selon l'une quelconque des revendications 4 à 6, **caractérisé en ce que** le support (32) comporte une partie (58) en saillie qui s'étend au bord de l'ouverture (50) du support (32) à partir de la face de fixation (18) du support (32) et qui comporte une rampe inclinée (60) tournée vers le crochet mobile (28) permettant l'appui du doigt (44) du dispositif de verrouillage (38) pour bloquer le crochet (28) mobile.

8. Elément (10) selon la revendication précédente, **caractérisé en ce que** la partie (58) en saillie s'étend sur la face de fixation (18) jusqu'à la première extrémité (19) du support plan (32) et porte les crochets rigides (22).

9. Elément (10) selon la revendication précédente, **caractérisé en ce que** le support (32) comporte, sur sa face intérieure (68) tournée vers l'intérieur de la coque (34), des moyens de fixation pour des équipements électriques, notamment pour une sonde de verrouillage centralisé et/ou un microphone (72) de téléphonie cellulaire, et **en ce que** sa partie en saillie (58) comporte une fiche femelle (62) pour la connexion desdits équipements électriques, un fond (66) de la fiche étant percé de passages (67) débouchant dans la face intérieure (68) du support (32) pour le passage de fils (70) d'alimentation desdits équipements électriques.

10. Elément (10) selon la revendication précédente, **caractérisé en ce qu'**une fenêtre (80), notamment en forme de grille, est découpée dans la coque (34) au droit des moyens de fixation des équipements électriques, notamment pour le fonctionnement de la sonde de verrouillage centralisé et/ou du microphone (72) de téléphonie cellulaire.

11. Elément (10) selon l'une des revendications 2 à 10, **caractérisé en ce qu'**il est destiné à être agencé en position centrale avant d'une panneau de garniture intérieure d'un pavillon du véhicule, et **en ce que** sa coque (34) bombée comporte au moins deux évidements cylindriques (82), opposés transversalement par rapport à la direction longitudinale (DL) du véhicule et présentant longitudinalement une section ouverte en forme de U, dont chacun est destiné à recevoir un doigt (84) d'extrémité de pare-soleil du véhicule.

12. Elément (10) selon la revendication précédente, **caractérisé en ce que** les parois intérieures des évidements (82) comportent des lumières (88) pour le passage de lames longitudinales élastiques (86) de rétention des doigts (84) d'extrémités des pare-soleils qui sont portées par la face intérieure (68) du support plan (32).

13. Elément (10) selon l'une quelconque des revendications 8 à 12, **caractérisé en ce que** la face intérieure (68) du support porte sur ses bords des pattes élastiques (33) de fixation qui sont destinées à être reçues dans des évidements complémentaires (35) de l'intérieur de la coque (34) pour permettre l'emboîtement du support (32) dans la coque (34).
